# EUROPEAN PATENT APPLICATION

(11) **EP 2 903 154 A1**
(43) Date of publication of application: **05.08.2015**
(21) Application number: 15152052.5
(22) Date of filing: 22.01.2015
(51) Int. Cl.: H02P 25/08, H02P 1/16, H02P 3/06, H02P 29/02

(54) **Controlling apparatus for switched reluctance motor and controlling method thereof**

(30) Priority: 03.02.2014 KR 20140012158
(71) Applicant: Samsung Electro-Mechanics Co., Ltd., Suwon-si, Gyeonggi-do 443-743 (KR)
(72) Inventor: Jang, Nam Hong, 443-743 Youngtong-Gu, Suwon-Si, Gyeonggi-Do (KR); Joung, Ho Son, 443-743 Youngtong-Gu, Suwon-Si, Gyeonggi-Do (KR); Shin, Hong Chul, 443-743 Youngtong-Gu, Suwon-Si, Gyeonggi-Do (KR)
(74) Representative: Heine, Christian Klaus

(57) **Abstract**

There are provided a controlling apparatus of a switched reluctance motor and a controlling method thereof. The controlling apparatus of the switched reluctance motor includes: a rectifying unit rectifying commercial power and supplying direct current power; a converter supplied with the direct current power output from the rectifying unit and driving the switched reluctance motor; a current recognizing unit connected to the rectifying unit and recognizing amplitude of an output current; and a controlling unit applying a driving signal to the converter to allow power to be supplied to a winding of a stator of any one phase and controlling the converter to stop the driving of the switched reluctance motor if it is determined that the winding of the stator of the corresponding phase is in a non-fastening state based on the amplitude of the output current recognized by the current recognizing unit.

## Description

### CROSS-REFERENCE TO RELATED APPLICATION

This application claims the benefit of Korean Patent Application No. 10-2014-0012158, filed on February 3, 2014, entitled "Controlling Apparatus for Switched Reluctance Motor and Controlling Method thereof" which is hereby incorporated by reference in its entirety into this application.

### BACKGROUND

The present disclosure relates to a controlling apparatus for a switched reluctance motor and a controlling method thereof.

In all fields in which a direct current (DC) motor has been mainly used, the DC motor has recently replaced with a brushless type motor which has no brush.

As the above-mentioned brushless type motor, a permanent magnet motor such as a brushless DC electric motor (BLDC) and a motor using reluctance torque such as a switched reluctance motor (SRM) have been researched.

Among others, the switched reluctance motor (SRM), which has a simple magnetic structure including a stator only around which a winding is wound and a rotor which has no a permanent magnet or the winding, has advantages that it is robust and cost for manufacturing thereof may be reduced.

The switched reluctance motor as described above may have various types such as a single-phase, a two-phase, a three-phase, and the like. Among others, the two-phase SRM has a driving circuit simpler than that of the three-phase SRM, such that it has been significantly highlighted in applications such as a fan, a blower, a compressor, and the like.

Further, in a switching controlling apparatus of the two-phase SRM, various schemes have been suggested and used in order to control current of a stator winding in a single direction. As one of the suggested schemes, there is a switching controlling apparatus using an asymmetric bridge converter for driving an existing alternate current motor.

The asymmetric bridge converter has two switches and diodes per each phase and has several operation modes.

Here, one operation mode may be a mode in which both of the two switches are turned on to apply a DC power voltage to the winding, thereby increasing the current, another operation mode may be a mode in which when the current flows in the winding, one switch is turned off to circulate the current through one diode and switch and the winding, thereby slowly decreasing the current, and the other operation mode may be a mode in which the two switches are simultaneously turned off to rapidly decrease the current.

The asymmetric bridge converter operated as described above is excellent in view of diversity of a control among converters for driving an SRM and may independently control the current of each phase, such that the currents of two phases may be overlapped with each other. In addition, the asymmetric bridge converter is appropriate for high voltage and large capacity and has a relatively low switch rated voltage.

Meanwhile, in the related art as described above, the controlling apparatus is designed to apply a bootstrap for an initial driving for a predetermined time and then immediately generate A phase and B phase outputs.

Therefore, even in the case in which the A phase or the B phase is disconnected, since the other is continuously fastened, the motor is started-up in the single phase, which causing a counter-rotation depending on an initial position of the rotor, thereby making it possible to occur slip and damage of the motor.

### [Related Art Document]

### [Patent Document]

(Patent Document 1) Korean Patent Laid-Open Publication No. 2013-0019112
(Patent Document 2) Japanese Unexamined Patent Application Publication No. 2005-528076
(Patent Document 3) Japanese Unexamined Patent Application Publication No. 2006-521780
(Patent Document 4) Korean Patent Laid-Open Publication No. 2002-0081862

### SUMMARY

An aspect of the present disclosure may provide a controlling apparatus for a switched reluctance motor capable of preventing a counter-rotation by rapidly blocking power in the case in which fastening defect occurs in one of A and B phases, and a method thereof.

According to an aspect of the present disclosure, a controlling apparatus for a switched reluctance motor may include: a rectifying unit rectifying commercial power and supplying direct current power; a converter supplied with the direct current power output from the rectifying unit and driving the switched reluctance motor; a current recognizing unit connected to the rectifying unit and recognizing amplitude of an output current; and a controlling unit applying a driving signal to the converter to allow power to be supplied to a winding of a stator of any one phase and controlling the converter to stop the driving of the switched reluctance motor if it is determined that the winding of the stator of the corresponding phase is in a non-fastening state based on the amplitude of the output current recognized by the current recognizing unit.

The rectifying unit may be a diode bridge rectifier including four diodes.

The controlling apparatus may further include a capacitor connected in parallel to the rectifying unit, removing noise of the output direct current power, and supplying the direct current power from which the noise is removed to the converter.

The current recognizing unit may include: a current sensor connected in series with any one output terminal of the rectifying unit to sense the output current; and a current voltage converter generating and outputting a voltage value which is proportional to amplitude of the output current sensed by the current sensor.

The controlling unit may apply the driving signal to the converter to allow the power to be supplied to the winding of the stator of any one phase, if it is determined that the winding of the stator of the corresponding phase is in a fastening state based on the amplitude of the output current recognized by the current recognizing unit, apply the driving signal to the converter to allow the power to be supplied to a winding of a stator of the other phase, and if it is determined that the winding of the stator of the corresponding phase is in a non-fastening state based on the amplitude of the output current recognized by the current recognizing unit, control the converter to stop the driving of the switched reluctance motor.

The converter may include: a first upper switch connected in series between one output terminal of the rectifying unit and one terminal of a winding of a first phase; a first lower switch connected in series between the other output terminal of the rectifying unit and the other terminal of the winding of the first phase; a second upper switch connected in series between one output terminal of the rectifying unit and one terminal of a winding of a second phase; and a second lower switch connected in series between the other output terminal of the rectifying unit and the other terminal of the winding of the second phase.

The controlling unit may include: a PWM driver applying a pulse width modulated switch on driving signal to an upper switch and a lower switch of any one phase to allow the power to be supplied to the winding of the stator of the corresponding phase and applying a switch off driving signal to the upper switch and the lower switch of all phases to stop the driving of the switched reluctance motor; and a controller controlling the PWM driver in order to determine whether or not a fastening of any one phase is made, applying the pulse width modulated switch on driving signal to the upper switch and the lower switch of the corresponding phase to allow the power to be supplied to the winding of the stator of the corresponding phase, if it is determined that the winding of the stator of the corresponding phase is in a non-fastening state based on the amplitude of the output current recognized by the current recognizing unit, controlling the PWM driver to stop the driving of the switched reluctance motor.

The controller may control the PWM driver to apply a driving signal to the converter to allow the power to be supplied to the winding of the stator of any one phase, if it is determined that the winding of the stator of the corresponding phase is in a fastening state based on the amplitude of the output current recognized by the current recognizing unit, control the PWM driver to apply the driving signal to the converter to allow the power to be supplied to a winding of a stator of the other phase, and if it is determined that the winding of the stator of the corresponding phase is in a non-fastening state based on the amplitude of the output current recognized by the current recognizing unit, control the PWM driver to stop the driving of the switched reluctance motor.

The pulse width modulated switch on driving signal applied to the upper switch and the lower switch of the converter by the PWM driver may have a duty ratio of 2% to 10%.

The pulse width modulated switch on driving signal applied to the upper switch and the lower switch of the converter by the PWM driver may have an application time of 10ms to 50ms.

According to another aspect of the present disclosure, a controlling method of a switched reluctance motor may include: (A) rectifying, by rectifying unit, commercial power and supplying direct current power; (B) applying, by a controlling unit, a driving signal to a converter so as to supply power to a winding of a stator of any one phase; (C) recognizing, by a current recognizing unit connected to the rectifying unit, amplitude of an output current; and (D) controlling, by the controlling unit, the converter to stop a driving of the switched reluctance motor if it is determined that the winding of stator of the corresponding phase is in a non-fastening state based on the amplitude of the output current recognized by the current recognizing unit.

The operation (C) may include: (C-1) sensing, by a current sensor of the current recognizing unit connected in series to any one output terminal of the rectifying unit, the output current; and (C-2) generating and outputting, by a current voltage converter of the current recognizing unit, a voltage value which is proportional to the amplitude of the output current sensed by the current sensor.

The operation (D) may include: (D-1) determining, by the controlling unit, whether or not the winding of the stator of the corresponding phase is in a fastening state based on the amplitude of the output current recognized by the current recognizing unit; and (D-2) controlling, by the controlling unit, the converter to stop the driving of the switched reluctance motor if the winding of the stator of the corresponding phase is in the non-fastening state as the result of the determination.

If it is determined that the winding of the stator of the corresponding phase is in the fastening state in the operation (D-1), the method may include: (E) applying, by the controlling unit, a driving signal to the converter so as to supply power to a winding of a stator of the other phase and if it is determined that the winding of the stator of the corresponding phase is in a non-fastening state based on the amplitude of the output current recognized by the current recognizing unit, controlling the converter to stop the driving of the switched reluctance motor.

The operation (E) may include: (E-1) applying, by the controlling unit, the driving signal to the converter so as to supply power to the winding of the stator of the other phase; (E-2) determining, by the controlling unit, whether or not the winding of the stator of the corresponding phase is in the fastening state based on the amplitude of the output current recognized by the current recognizing unit; and (E-3) controlling, by the controlling unit, the converter to stop the driving of the switched reluctance motor if the winding of the stator of the corresponding phase is in the non-fastening state as the result of the determination.

If it is determined that the winding of the stator of the corresponding phase is in the fastening state in the operation (E-2), the method may include: (F) accelerating, by the controlling unit, the switched reluctance motor while increasing a duty ratio of a pulse width modulated switch on driving signal; and (G) determining, by the controlling unit, whether or not a RPM of the motor arrives at a reference RPM and allowing the motor to be driven at a constant velocity if the RPM of the motor arrives at the reference RPM.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a configuration diagram of a controlling apparatus for a switched reluctance motor according to an exemplary embodiment of the present disclosure;
FIG. 2 is a circuit diagram of FIG. 1;
FIG. 3 is a detailed configuration diagram of a current recognizing unit of FIG. 1;
FIG. 4 is a waveform diagram of a signal for an initial start-up;
FIG. 5 is a waveform diagram illustrating a sensing signal of an output signal of a rectifying unit; and
FIG. 6 is a flowchart of a controlling method of a switched reluctance motor according to an exemplary embodiment of the present disclosure.

### DETAILED DESCRIPTION

The objects, features and advantages of the present disclosure will be more clearly understood from the following detailed description of the exemplary embodiments taken in conjunction with the accompanying drawings. Throughout the accompanying drawings, the same reference numerals are used to designate the same or similar components, and redundant descriptions thereof are omitted. Further, in the following description, the terms "first," "second," "one side," "the other side" and the like are used to differentiate a certain component from other components, but the configuration of such components should not be construed to be limited by the terms. Further, in the description of the present disclosure, when it is determined that the detailed description of the related art would obscure the gist of the present disclosure, the description thereof will be omitted.

Hereinafter, exemplary embodiments of the present disclosure will be described in detail with reference to the accompanying drawings.

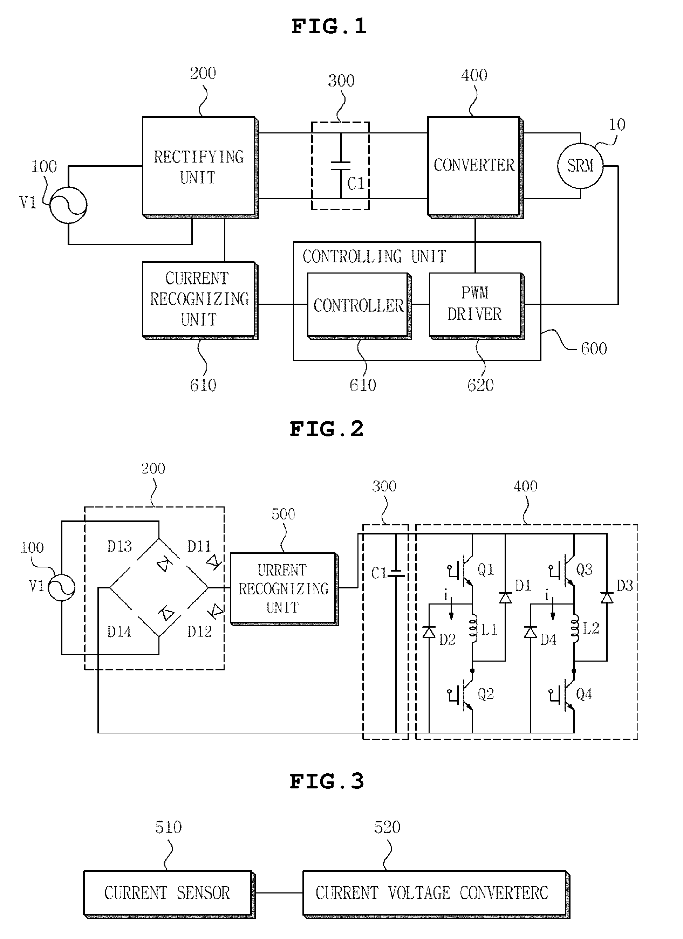

FIG. 1 is a configuration diagram of a controlling apparatus for a switched reluctance motor according to an exemplary embodiment of the present disclosure.

Referring to FIG. 1, a configuration of the controlling apparatus for the switched reluctance motor according to the exemplary embodiment of the present disclosure includes a rectifying unit 200 rectifying commercial power 100 to supply direct current (DC) power, a capacitor 300 connected in parallel to the rectifying unit 200, a converter 400 connected to the capacitor 300, a current recognizing unit 500 connected to the rectifying unit 200 and recognizing an amplitude of an output current, and a controlling unit 600 controlling the converter 400.

The rectifying unit 200 rectifies the input commercial power 100 to supply the rectified commercial power to the capacitor 300. In addition, the capacitor 300 improves a power factor of the rectified direct current power and removes noise to supply the power of which the power factor is improved and the noise is removed to the converter 400.

Referring to FIG. 2, the rectifying unit 200 as mentioned above is formed of a diode bridge rectifier including four diodes D11 to D14 and rectifies the input commercial power 100 to supply the rectified commercial power to the capacitor 300.

Although FIG. 1 illustrates a case in which the capacitor 300 is positioned at a rear stage of the rectifying unit 200, the present disclosure may be driven even though the configuration of the capacitor 300 is omitted if necessary.

Meanwhile, the converter 400 has a pair of switches including upper switches Q1 and Q3 and lower switches Q2 and Q4 which are connected to the respective phase windings L1 and L2, as illustrated in FIG. 2.

That is, the converter 400 includes the upper switch Q1 connected in series between one output terminal of the rectifying unit 200 and one terminal of an A phase winding L1, the lower switch Q2 connected in series between the other output terminal of the rectifying unit 200 and the other terminal of the A phase winding L1, the upper switch Q3 connected in series between one output terminal of the rectifying unit 200 and one terminal of a B phase winding L2, and the lower switch Q4 connected in series between the other output terminal of the rectifying unit 200 and the other terminal of the B phase winding L2.

In addition, the converter 400 is provided with a pair of diodes including upper diodes D1 and D3 corresponding to the upper switches Q1 and Q3 and lower diodes D2 and D4 corresponding to the lower switches Q2 and Q4 so that a winding current of the corresponding winding L1 or L2 is returned when any one of the pair of switches is turned off.

The converter 400 configured as described above sequentially actives the windings L1 and L2 so that positive torque occurs in a rotor positioned in an inner side of a stator of the switched reluctance motor to be rotated. To this end, the converter 400 has four modes (mode 1 to mode 4).

In the mode 1 in which the converter 400 is driven, both of a corresponding upper switch QU and a lower switch QL of the corresponding winding L that is intended to active are turned on. Therefore, the entire commercial power V1 is applied to the corresponding winding, such that the winding current i flows.

Next, in the mode 2 in which the converter 400 is driven, both of the two switches QU and QL of the corresponding winding L are turned off, and the winding current is reduced by returning energy to a capacitor C1 through an upper diode DU and a lower diode DL. In this case, the current needs to be completely removed or an amount of the current needs to be significantly small, before inductance of the corresponding phase has a negative slope. The power applied to the winding in the mode 2 is negative commercial power -V1.

In addition, in the mode 3 in which the converter 400 is driven, only the upper switch QU of the corresponding winding L is turned on, and the winding current is circulated through the upper diode DU, the upper switch QU, and the winding. In this case, a voltage applied to the winding is 0.

In addition, in the mode 4 in which the converter 400 is driven, only the lower switch QL of the corresponding winding L is turned on, and the winding current is circulated through the lower diode DL, the lower switch QL, and the winding. In this case, a voltage applied to the winding is 0.

The converter 400 having the above-mentioned operation modes is driven in mode 1 to mode 4 according to a switching control signal (switching on driving signal or switching off driving signal) provided from the controlling unit 600 to active the corresponding windings L1 and L2.

Meanwhile, the current recognizing unit 500 is connected to the rectifying unit 200 and measures and outputs amplitude of the output current.

The above-mentioned current recognizing unit 500 is connected to an output terminal of the rectifying unit 200 as illustrated in FIG. 2 and measures and outputs the amplitude of the output current which is input to the converter 400.

Particularly, the current recognizing unit 500 converts the amplitude of the output current which is input to the converter 400 into a voltage value and outputs the voltage value.

In this case, a range of the voltage value which is output by the current recognizing unit 500 may be changed from 1.65V to 3.3V in the case in which a current value is changed from 0A to 12.5A, by way of example.

Of course, in this case, the range of the voltage value which is output by the current recognizing unit 500 may be changed from 0V to 12.5V in the case in which the current value is changed from 0A to 12.5A, by way of another example, and the setting of the voltage range is arbitrary.

The detailed configuration diagram of the above-mentioned current recognizing unit 500 is illustrated in FIG. 3. The current recognizing unit 500 includes a current sensor 510 and a current voltage converter 520.

The current sensor 510 is connected in series to the output terminal of the rectifying unit 200 and senses and outputs amplitude of an output current. The current which is output from the output terminal of the rectifying unit 200 is an input current in the light of the converter 400.

Next, the current voltage converter 520 generates and outputs a voltage value which is proportional to the amplitude of the current sensed by the current sensor 510.

In this case, a range of the voltage value which is output by the current voltage converter 520 may be changed from 1.65V to 3.3V in the case in which a current value is changed from 0A to 12.5A, by way of example.

Of course, in this case, the range of the voltage value which is output by the current voltage converter 520 may be changed from 0V to 12.5V in the case in which the current value is changed from 0A to 12.5A, by way of another example, and the setting of the voltage range is arbitrary.

Meanwhile, the controlling unit 600 applies a driving signal to the converter 400 so as to supply power to the winding of the stator of any one phase, determines whether or not the winding of the stator of the corresponding phase is fastened based on the amplitude of the output current recognized by the current recognizing unit 500 (i.e., determines whether or not the winding is disconnected), and if it is determined that the winding is in a non-fastening state (i.e., it is determined that the winding is disconnected), then controls the converter 400 to stop the driving of the switched reluctance motor.

Alternatively, the controlling unit 600 applies the driving signal to the converter 400 so as to supply power to the winding of the stator of any one phase, if it is determined that the winding of the stator of the corresponding phase is in the fastening state, applies the driving signal so as to supply power to the winding of the stator of the other phase, and if it is determined that the winding of the stator of the corresponding phase is in the non-fastening state, controls the converter 400 to stop the driving of the switched reluctance motor.

Unlike this, if it is determined that the winding of the stator of the corresponding phase is in the fastening state as a result of the determination, the controlling unit 600 accelerates the switched reluctance motor by controlling the converter 400 and allows the switched reluctance motor to be driven at a constant velocity if the switched reluctance motor arrives at a reference RPM.

The controlling unit 600 operated as described above includes a controller 610 and a PWM driver 620.

Here, the controller 610 controls the PWM driver 620 in order to determine whether or not the winding of the stator of any one phase is fastened to apply a pulse width modulated switch on driving signal to the upper switch and the lower switch of the corresponding phase, thereby supplying power to the winding of the stator of the corresponding phase.

In addition, the controller 610 determines whether or not the winding of the stator of the corresponding phase is fastened based on the amplitude of the output current recognized by the current recognizing unit 500 (i.e., determines whether or not the winding is disconnected), and if it is determined that the winding is in the non-fastening state (i.e., it is determined that the winding is disconnected), controls the PWM driver 620 so as not to supply power to the windings the stators of all phases, thereby stopping the driving of the switched reluctance motor.

The PWM driver 620 applies the pulse width modulated switch on driving signal to the upper switch and the lower switch of the corresponding phase according to a control of the controller 610, thereby supplying power to the winding of the stator of the corresponding phase.

In addition, the PWM driver 620 applies a switch off driving signal to the upper switch and the lower switch of all phases according to the control of the controller 610 so as not to supply power to the windings of the stators of all phases, thereby stopping the driving of the switched reluctance motor.

An operation of the controlling apparatus for the switched reluctance motor according to the exemplary embodiment of the present disclosure configured as described above will be described in more detail below.

First, the controller 610 of the controlling unit 600 applies a bootstrap control signal to the PWM driver 620 for an initial start-up.

Then, the PWM driver 620 generates a pulse width modulated switch on driving signal having a duty ratio corresponding to a preset low voltage and applies the pulse width modulated switch on driving signal to the lower switch Q2 corresponding to the A phase of the converter 400 and the lower switch Q4 corresponding to the B phase of the converter 400, thereby implementing a bootstrap.

In addition, the controller 610 of the controlling unit 600 generates and outputs a start-up control signal for applying an ON signal of a low voltage to the upper switch Q1 and the lower switch Q2 corresponding to the A phase of the converter 400 to the PWM driver 620 in order to continuously determine whether or not the fastening is made.

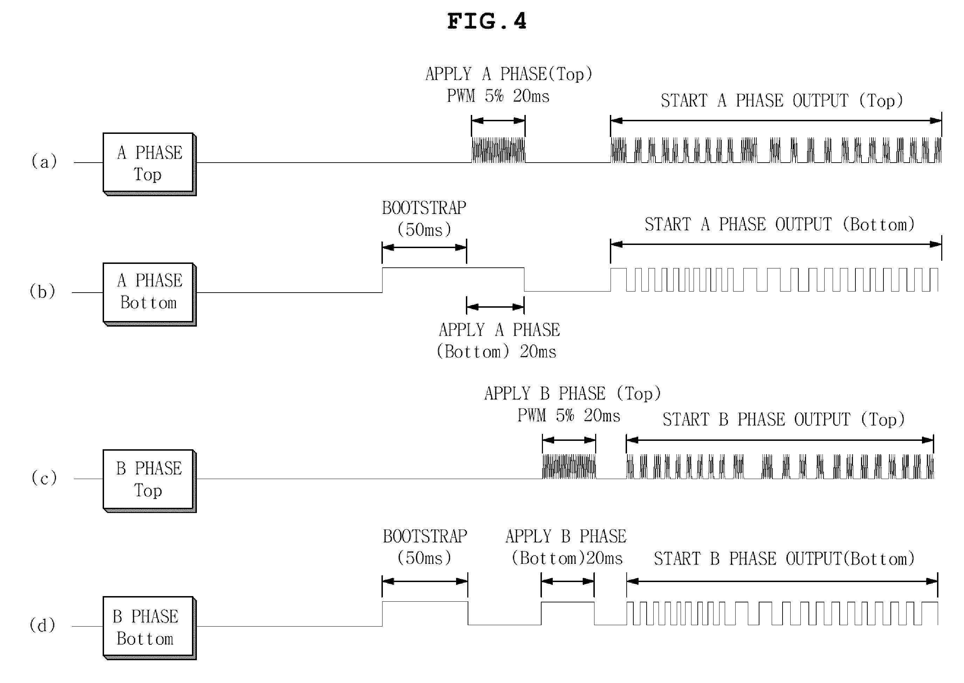

Then, the PWM driver 620 applies the pulse width modulated switch on driving signal having the duty ratio corresponding to the preset low voltage to the upper switch Q1 and the lower switch Q2 corresponding to the A phase for a preset certain time in a situation in which the bootstrap is completed. Voltage waveforms applied to the winding L1 of the A phase by the above-mentioned processes are illustrated in a waveform diagram (a) and a waveform diagram (b) of FIG. 4.

In this case, the duty ratio of the pulse width modulated switch on driving signal generated by the PWM driver 620 is a range from 2% to 10%, and is preferably 5%.

In addition, the application time of the pulse width modulated signal for the bootstrap applied to the lower switch Q2 by the PWM driver 620 is a range of 30ms to 80ms, and is preferably 50ms.

In addition, the application time of the pulse width modulated switch on driving signals which are simultaneously applied to the upper switch Q1 and the lower switch Q2 by the PWM driver 620 is a range of 10ms to 50ms, and is preferably 20ms.

In the above-mentioned situation, if the disconnection does not occur in the winding L1 of the A phase of the switched reluctance motor 10, the current sensor 510 of the current recognizing unit 500 senses the output current of the rectifying unit 200 and generates and outputs a signal having current amplitude of a square wave shape in which amplitude of the output current rises at a predetermined width and then falls.

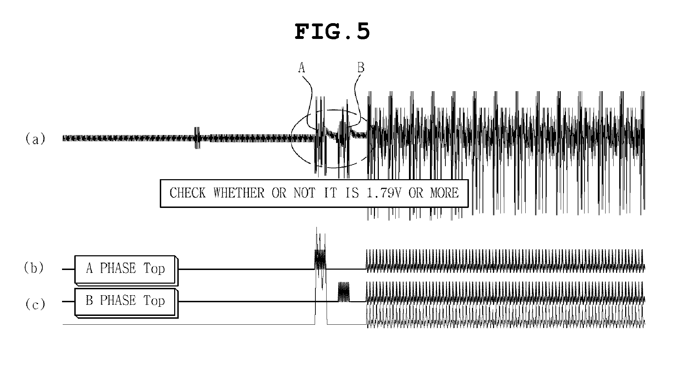

Then, the current voltage converter 520 generates and outputs a voltage signal which is proportional to a change in the amplitude of the output current, which corresponds to a portion A of a waveform diagram (a) of FIG. 5.

As such, if the voltage signal which is proportional to the change in the amplitude of the output current of the rectifying unit 200 output from the current voltage converter 520 has the square wave shape, the controller 610 determines that fastening defect (i.e., disconnection) does not occur in the winding L1 of the A phase.

Unlike this, if the disconnection occurs in the winding L1 of the A phase of the switched reluctance motor 10, the output current does not occur from the rectifying unit 200 (i.e., no output current since a current path is not formed due to the disconnection), and the current sensor 510 of the current recognizing unit 500 senses the output current of the rectifying unit 200 as 0 and generates and outputs a signal having no change in the amplitude of the output current.

As such, if there is no change in the amplitude of the output current, a constant signal in which the output voltage signal of the current voltage converter 520 also has no change is output.

As such, if the voltage signal of the predetermined amplitude having no change reflecting the output current of the rectifying unit 200 output from the current voltage converter 520 is output, the controller 610 determines the fastening defect for the winding L1 of the A phase (i.e., determines the disconnection) to output a stop signal to the PWM driver 620.

Then, the PWM driver 620 applies the switch off driving signal to the upper switch Q1 and the lower switch Q2 corresponding to the winding of the A phase and applies the switch off driving signal to the upper switch Q3 and the lower switch Q4 corresponding to the winding of the B phase, thereby stopping the switched reluctance motor 10.

Meanwhile, if the fastening defect is not sensed as a result of applying the pulse width modulated switch on driving signal of the low voltage to the upper switch Q1 and the lower switch Q2 corresponding to the winding L1 of the A phase for a short time as described above, the controller 610 of the controlling unit 600 outputs a start-up control signal for applying the pulse width modulated switch on driving signal of the low voltage to the pair of switches Q3 and Q4 corresponding to the B phase of the converter 400 to the PWM driver 620.

Then, the PWM driver 620 applies the pulse width modulated switch on driving signal having the duty ratio corresponding to the preset low voltage to the upper switch Q3 and the lower switch Q4 corresponding to the B phase for a preset certain time in a situation in which the bootstrap is completed. Voltage waveforms applied to the winding L2 of the B phase by the above-mentioned processes are illustrated in a waveform diagram (c) and a waveform diagram (d) of FIG. 4.

In this case, the duty ratio of the pulse width modulated signal generated by the PWM driver 620 is a range from 2% to 10%, and is preferably 5%.

In addition, the application time of the pulse width modulated switch on driving signals which are simultaneously applied to the upper switch Q3 and the lower switch Q4 by the PWM driver 620 is a range of 10ms to 50ms, and is preferably 20ms.

] In the above-mentioned situation, if the disconnection does not occur in the winding L2 of the B phase of the switched reluctance motor 10, the current sensor 510 of the current recognizing unit 500 senses the output current of the rectifying unit 200 and generates and outputs a signal having current amplitude of a square wave shape in which amplitude of the output current rises at a predetermined width and then falls.

Then, the current voltage converter 520 generates and outputs a voltage signal which is proportional to a change in the amplitude of the output current, which corresponds to a portion B of a waveform diagram (a) of FIG. 5.

As such, if the voltage signal which is proportional to the change in the amplitude of the output current of the rectifying unit 200 output from the current voltage converter 520 has the square wave shape, the controller 610 determines that fastening defect (i.e., disconnection) does not occur in the winding L2 of the B phase.

Unlike this, if the disconnection occurs in the winding L2 of the B phase of the switched reluctance motor 10, the output current does not occur from the rectifying unit 200 (i.e., no output current since a current path is not formed due to the disconnection), and the current sensor 510 of the current recognizing unit 500 senses the output current of the rectifying unit 200 as 0 and generates and outputs a signal having no change in the amplitude of the output current.

As such, if there is no change in the amplitude of the output current, a constant signal in which the output voltage signal of the current voltage converter 520 also has no change is output.

As such, if the voltage signal of the predetermined amplitude having no change reflecting the output current of the rectifying unit 200 output from the current voltage converter 520 is output, the controller 610 determines the fastening defect for the winding L2 of the B phase (i.e., determines the disconnection) to output a stop signal to the PWM driver 620.

Then, the PWM driver 620 applies the switch off driving signal to the upper switch Q1 and the lower switch Q2 corresponding to the winding of the B phase, thereby stopping the switched reluctance motor 10.

Meanwhile, by the processes described above, if the disconnection of the winding of the A phase and the winding of the B phase is not found, the controller 610 of the controlling unit 600 controls the PWM driver 620 to accelerate the switched reluctance motor 10 while increasing the duty ratio of the pulse width modulated signal.

In addition, continuously, the controller 610 of the controlling unit 600 determines whether or not the RPM of the switched reluctance motor 10 arrives at a reference RPM, and if the RPM of the switched reluctance motor 10 arrives at the reference RPM, controls the PWM driver 620 to apply the pulse width modulated signal having a constant duty ratio to the corresponding switch of the converter 400, thereby allowing the switched reluctance motor 10 to be driven at a constant velocity.

Meanwhile, the waveform (b) of FIG. 5 is equal to the waveform (a) of FIG. 4, and the waveform (c) of FIG. 5 is equal to the waveform (c) of FIG. 4

According to the exemplary embodiments of the present disclosure as described above, in the case in which the fastening defect occurs in one of the A and B phases, the motor is stopped by detecting the fastening defect, thereby making it possible to prevent the counter-rotation.

By preventing the counter-rotation according to the present disclosure as described above, a motor slip phenomenon occurring when the nut fastened to the motor is missed in the case in which the motor is accelerated in the counter-rotation state may be prevented.

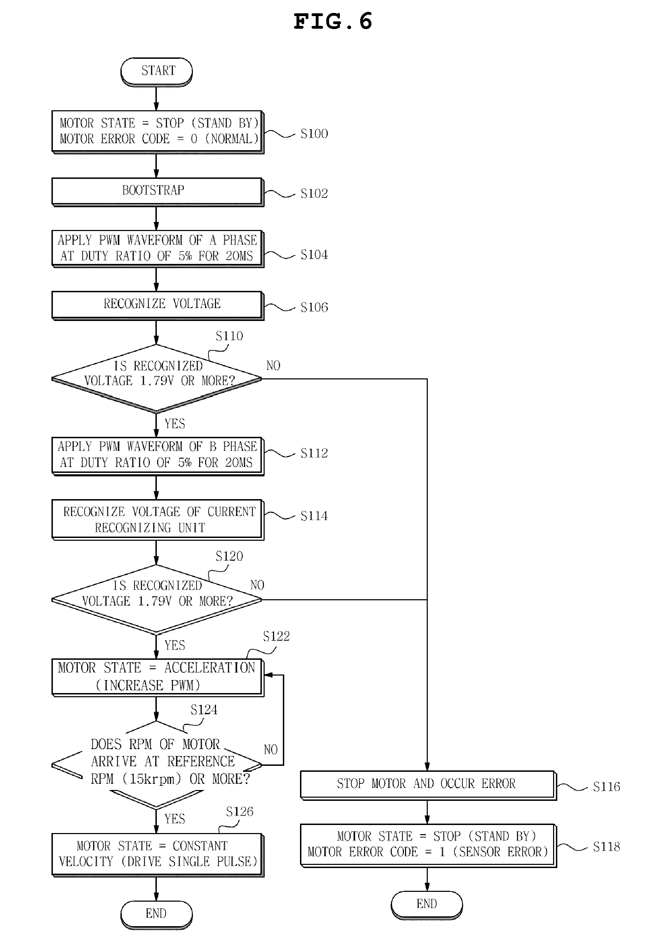

FIG. 6 is a flowchart of a method for controlling a switched reluctance motor according to an exemplary embodiment of the present disclosure.

Referring to FIG. 6, in a method for controlling a switched reluctance motor according to an exemplary embodiment of the present disclosure, the controller 610 of the controlling unit 600 first sets a motor error code to a normal in a state in which the motor is in a standby state (S100). In this case, a normal code of the motor error code may be set to 0.

Next, the controller 610 of the controlling unit 600 applies a bootstrap control signal to the PWM driver 620 for an initial start-up.

Then, the PWM driver 620 generates a pulse width modulated switch on driving signal having a duty ratio corresponding to a preset low voltage (e.g., the duty ratio of the pulse width modulated switch on driving signal is a range from 2% to 10%, and is preferably 5%) and applies the pulse width modulated switch on driving signal to the lower switch Q2 corresponding to the A phase of the converter 400 and the lower switch Q4 corresponding to the B phase of the converter 400 for a predetermined time (e.g., the application time of the pulse width modulated signal for the bootstrap is a range of 30ms to 80ms, and is preferably 50ms), thereby implementing a bootstrap (S102).

In addition, the controller 610 of the controlling unit 600 continuously generates and outputs a start-up control signal for applying a pulse width modulated switch on driving signal of a low voltage to the upper switch Q1 and the lower switch Q2 corresponding to the A phase of the converter 400 to the PWM driver 620 for the initial start-up.

Then, the PWM driver 620 applies the pulse width modulated switch on driving signal having the duty ratio (e.g., the duty ratio is a range of 2% to 10%, and is preferably 5%) corresponding to the preset low voltage to the upper switch Q1 and the lower switch Q2 corresponding to the A phase for a preset certain time (e.g., 10ms to 50ms, and preferably 20ms) in a situation in which the bootstrap is completed (S104).

In this situation, in order to determine whether or not the disconnection occurs in the winding L1 of the A phase of the switched reluctance motor 10, the controller 610 of the controlling unit 600 determines whether or not the amplitude of the voltage signal output from the current recognizing unit 500 becomes a predetermined value (e.g., 1.790V) (S110).

In this case, in the situation in which the disconnection does not occur in the winding L1 of the A phase of the switched reluctance motor 10, the current sensor 510 of the current recognizing unit 500 senses the output current of the rectifying unit 200 and generates and outputs a signal having current amplitude of a square wave shape in which amplitude of the output current rises at a predetermined width and then falls.

In addition, the current voltage converter 520 generates and outputs the voltage signal which is proportional to the change in the amplitude of the output current, accordingly.

As such, as the voltage signal which is proportional to the change in the amplitude of the output current of the rectifying unit 200 output from the current voltage converter 520 has the square wave shape, the controller 610 determines the amplitude of the voltage signal output from the current recognizing unit 500 as a predetermined value and consequently, determines that the fastening defect (i.e., disconnection) does not occur in the winding L1 of the A phase.

As such, if the fastening defect is not sensed as a result of applying the pulse width modulated switch on driving signal of the low voltage to the upper switch Q1 and the lower switch Q2 corresponding to the winding L1 of the A phase for a short time as described above, the controller 610 of the controlling unit 600 continuously generates and outputs a start-up control signal for applying the switch on driving signal of the low voltage to the upper switch Q3 and the lower switch Q4 corresponding to the B phase of the converter 400 to the PWM driver 620 for the initial start-up.

Then, the PWM driver 620 applies the pulse width modulated switch on driving signal having the duty ratio (e.g., the duty ratio is a range of 2% to 10%, and is preferably 5%) corresponding to the preset low voltage to the upper switch Q3 and the lower switch Q4 corresponding to the B phase for a preset certain time (e.g., 10ms to 50ms, and preferably 20ms) in a situation in which the bootstrap is completed (S112).

In this situation, in order to determine whether or not the disconnection occurs in the winding L2 of the B phase of the switched reluctance motor 10, the controller 610 of the controlling unit 600 determines whether or not the amplitude of the voltage signal output from the current recognizing unit 500 becomes a predetermined value (e.g., 1.790V) (S120).

In this case, in the situation in which the disconnection does not occur in the winding L2 of the B phase of the switched reluctance motor 10, the current sensor 510 of the current recognizing unit 500 senses the output current of the rectifying unit 200 and generates and outputs a signal having current amplitude of a square wave shape in which amplitude of the output current rises at a predetermined width and then falls.

In addition, the current voltage converter 520 generates and outputs the voltage signal which is proportional to the change in the amplitude of the output current, accordingly.

As such, as the voltage signal which is proportional to the change in the amplitude of the output current of the rectifying unit 200 output from the current voltage converter 520 has the square wave shape, the controller 610 determines the amplitude of the voltage signal output from the current recognizing unit 500 as a predetermined value and consequently, determines that the fastening defect (i.e., disconnection) does not occur in the winding L2 of the B phase.

As such, if the fastening defect is not sensed as a result of applying the pulse width modulated switch on driving signal of the low voltage to the upper switch Q1 and the lower switch Q2 corresponding to the winding L2 of the B phase for a short time as described above, the controller 610 of the controlling unit 600 controls the PWM driver 620 to accelerate the switched reluctance motor 10 while increasing the duty ratio of the pulse width modulated switch on driving signal (S122).

In addition, continuously, the controller 610 of the controlling unit 600 determines whether or not the RPM of the switched reluctance motor 10 arrives at a reference RPM (S124), and if the RPM of the switched reluctance motor 10 arrives at the reference RPM, controls the PWM driver 620 to apply the pulse width modulated switch on driving signal having a constant duty ratio to the corresponding switch of the converter 400, thereby allowing the switched reluctance motor 10 to be driven at a constant velocity (S126).

Meanwhile, if the disconnection occurs in the winding L1 of the A phase of the switched reluctance motor 10, the output current does not occur from the rectifying unit 200(i.e., no the output current since a current path is not formed due to the disconnection), and the current sensor 510 of the current recognizing unit 500 senses the output current of the rectifying unit 200 as 0 and generates and outputs a signal having no change in the amplitude of the output current.

As such, if there is no change in the amplitude of the output current, a constant signal in which the output voltage signal of the current voltage converter 520 also has no change is output.

As such, if the voltage signal of the predetermined amplitude having no change reflecting the output current of the rectifying unit 200 output from the current voltage converter 520 is output, in S110, the controller 610 of the controlling unit 600 determines the fastening defect for the winding L1 of the A phase (i.e., determines the disconnection) (S116) to output a stop signal to the PWM driver 620. In addition, the controller 610 of the controlling unit 600 sets a motor error code as sensor error. In this case, the sensor error code may be 1 (S118).

Meanwhile, if the disconnection occurs in the winding L2 of the B phase of the switched reluctance motor 10, the output current does not occur from the rectifying unit 200(i.e., no the output current since a current path is not formed due to the disconnection), and the current sensor 510 of the current recognizing unit 500 senses the output current of the rectifying unit 200 as 0 and generates and outputs a signal having no change in the amplitude of the output current.

As such, if there is no change in the amplitude of the output current, a constant signal in which the output voltage signal of the current voltage converter 520 also has no change is output.

As such, if the voltage signal of the predetermined amplitude having no change reflecting the output current of the rectifying unit 200 output from the current voltage converter 520 is output, in S120, the controller 610 of the controlling unit 600 determines the fastening defect for the winding L2 of the A phase (i.e., determines the disconnection) (S116) to output a stop signal to the PWM driver 620. In addition, the controller 610 of the controlling unit 600 sets a motor error code as sensor error. In this case, the sensor error code may be 1 (S118).

According to the exemplary embodiments of the present disclosure as described above, in the case in which the fastening defect occurs in one of the A and B phases, the motor is stopped by detecting the fastening defect, thereby making it possible to prevent the counter-rotation.

By preventing the counter-rotation according to the present disclosure as described above, a motor slip phenomenon occurring when the nut fastened to the motor is missed in the case in which the motor is accelerated in the counter-rotation state may be prevented.

As set forth above, according to the exemplary embodiments of the present disclosure, in the case in which the fastening defect occurs in one of the A and B phases, the motor is stopped by detecting the fastening defect, thereby making it possible to prevent the counter-rotation.

By preventing the counter-rotation according to the present disclosure as described above, a motor slip phenomenon occurring when the nut fastened to the motor is missed in the case in which the motor is accelerated in the counter-rotation state may be prevented.

Although the embodiments of the present disclosure have been disclosed for illustrative purposes, it will be appreciated that the present disclosure is not limited thereto, and those skilled in the art will appreciate that various modifications, additions and substitutions are possible, without departing from the scope and spirit of the disclosure.

Accordingly, any and all modifications, variations or equivalent arrangements should be considered to be within the scope of the disclosure, and the detailed scope of the disclosure will be disclosed by the accompanying claims.

## Claims

1. A controlling apparatus for a switched reluctance motor, the controlling apparatus comprising:
a rectifying unit rectifying commercial power and supplying direct current power;
a converter supplied with the direct current power output from the rectifying unit and driving the switched reluctance motor;
a current recognizing unit connected to the rectifying unit and recognizing amplitude of an output current; and
a controlling unit applying a driving signal to the converter to allow power to be supplied to a winding of a stator of any one phase and controlling the converter to stop the driving of the switched reluctance motor if it is determined that the winding of the stator of the corresponding phase is in a non-fastening state based on the amplitude of the output current recognized by the current recognizing unit.

2. The controlling apparatus of claim 1, wherein the rectifying unit is a diode bridge rectifier including four diodes.

3. The controlling apparatus of claim 1, further comprising a capacitor connected in parallel to the rectifying unit, removing noise of the output direct current power, and supplying the direct current power from which the noise is removed to the converter.

4. The controlling apparatus of claim 1, wherein the current recognizing unit includes:
a current sensor connected in series with any one output terminal of the rectifying unit to sense the output current; and
a current voltage converter generating and outputting a voltage value which is proportional to amplitude of the output current sensed by the current sensor.

5. The controlling apparatus of claim 1, wherein the controlling unit applies the driving signal to the converter to allow the power to be supplied to the winding of the stator of any one phase, if it is determined that the winding of the stator of the corresponding phase is in a fastening state based on the amplitude of the output current recognized by the current recognizing unit, applies the driving signal to the converter to allow the power to be supplied to a winding of a stator of the other phase, and if it is determined that the winding of the stator of the corresponding phase is in a non-fastening state based on the amplitude of the output current recognized by the current recognizing unit, controls the converter to stop the driving of the switched reluctance motor.

6. The controlling apparatus of claim 1, wherein the converter includes:
a first upper switch connected in series between one output terminal of the rectifying unit and one terminal of a winding of a first phase;
a first lower switch connected in series between the other output terminal of the rectifying unit and the other terminal of the winding of the first phase;
a second upper switch connected in series between one output terminal of the rectifying unit and one terminal of a winding of a second phase; and
a second lower switch connected in series between the other output terminal of the rectifying unit and the other terminal of the winding of the second phase.

7. The controlling apparatus of claim 6, wherein the controlling unit includes:
a PWM driver applying a pulse width modulated switch on driving signal to an upper switch and a lower switch of any one phase to allow the power to be supplied to the winding of the stator of the corresponding phase and applying a switch off driving signal to the upper switch and the lower switch of all phases to stop the driving of the switched reluctance motor; and
a controller controlling the PWM driver in order to determine whether or not a fastening of any one phase is made, applying the pulse width modulated switch on driving signal to the upper switch and the lower switch of the corresponding phase to allow the power to be supplied to the winding of the stator of the corresponding phase, if it is determined that the winding of the stator of the corresponding phase is in a non-fastening state based on the amplitude of the output current recognized by the current recognizing unit, controlling the PWM driver to stop the driving of the switched reluctance motor.

8. The controlling apparatus of claim 6, wherein the controller controls the PWM driver to apply a driving signal to the converter to allow the power to be supplied to the winding of the stator of any one phase, if it is determined that the winding of the stator of the corresponding phase is in a fastening state based on the amplitude of the output current recognized by the current recognizing unit, controls the PWM driver to apply the driving signal to the converter to allow the power to be supplied to a winding of a stator of the other phase, and if it is determined that the winding of the stator of the corresponding phase is in a non-fastening state based on the amplitude of the output current recognized by the current recognizing unit, controls the PWM driver to stop the driving of the switched reluctance motor.

9. The controlling apparatus of claim 6, wherein the pulse width modulated switch on driving signal applied to the upper switch and the lower switch of the converter by the PWM driver has a duty ratio of 2% to 10%.

10. The controlling apparatus of claim 6, wherein the pulse width modulated switch on driving signal applied to the upper switch and the lower switch of the converter by the PWM driver has an application time of 10ms to 50ms.

11. A controlling method of a switched reluctance motor, the controlling method comprising:
(A) rectifying, by a rectifying unit, commercial power and supplying direct current power;
(B) applying, by a controlling unit, a driving signal to a converter so as to supply power to a winding of a stator of any one phase;
(C) recognizing, by a current recognizing unit connected to the rectifying unit, amplitude of an output current; and
(D) controlling, by the controlling unit, the converter to stop a driving of the switched reluctance motor if it is determined that the winding of stator of the corresponding phase is in a non-fastening state based on the amplitude of the output current recognized by the current recognizing unit.

12. The controlling method of claim 11, wherein the operation (C) includes:
(C-1) sensing, by a current sensor of the current recognizing unit connected in series to any one output terminal of the rectifying unit, the output current; and
(C-2) generating and outputting, by a current voltage converter of the current recognizing unit, a voltage value which is proportional to the amplitude of the output current sensed by the current sensor.

13. The controlling method of claim 11, wherein the operation (D) includes:
(D-1) determining, by the controlling unit, whether or not the winding of the stator of the corresponding phase is in a fastening state based on the amplitude of the output current recognized by the current recognizing unit; and
(D-2) controlling, by the controlling unit, the converter to stop the driving of the switched reluctance motor if the winding of the stator of the corresponding phase is in the non-fastening state as the result of the determination.

14. The controlling method of claim 13, further comprising, if it is determined that the winding of the stator of the corresponding phase is in the fastening state in the operation (D-1),
(E) applying, by the controlling unit, a driving signal to the converter so as to supply power to a winding of a stator of the other phase and if it is determined that the winding of the stator of the corresponding phase is in a non-fastening state based on the amplitude of the output current recognized by the current recognizing unit, controlling the converter to stop the driving of the switched reluctance motor.

15. The controlling method of claim 14, wherein the operation (E) includes:
(E-1) applying, by the controlling unit, the driving signal to the converter so as to supply power to the winding of the stator of the other phase;
(E-2) determining, by the controlling unit, whether or not the winding of the stator of the corresponding phase is in the fastening state based on the amplitude of the output current recognized by the current recognizing unit; and
(E-3) controlling, by the controlling unit, the converter to stop the driving of the switched reluctance motor if the winding of the stator of the corresponding phase is in the non-fastening state as the result of the determination.

16. The controlling method of claim 15, further comprising, if it is determined that the winding of the stator of the corresponding phase is in the fastening state in the operation (E-2),
(F) accelerating, by the controlling unit, the switched reluctance motor while increasing a duty ratio of a pulse width modulated switch on driving signal; and
(G) determining, by the controlling unit, whether or not a RPM of the motor arrives at a reference RPM and allowing the motor to be driven at a constant velocity if the RPM of the motor arrives at the reference RPM.
